# EUROPEAN PATENT SPECIFICATION

(11) **EP 3 845 793 B1**
(45) Date of publication and mention of the grant of the patent: **02.08.2023**
(21) Application number: 18932278.7
(22) Date of filing: 28.08.2018
(51) Int. Cl.: F16L 59/14, F16L 55/033

(54) **PIPING WITH SOUND-ABSORBING MATERIAL, REFRIGERATION CYCLE DEVICE, AND METHOD FOR MOUNTING SOUND-ABSORBING MATERIAL**
ROHRLEITUNG MIT SCHALLABSORBIERENDEM MATERIAL, KÄLTEKREISLAUFVORRICHTUNG UND VERFAHREN ZUR MONTAGE VON SCHALLABSORBIERENDEM MATERIAL
TUYAUTERIE AVEC MATÉRIAU ABSORBANT ACOUSTIQUE, DISPOSITIF DE CYCLE DE RÉFRIGÉRATION ET PROCÉDÉ DE MONTAGE DE MATÉRIAU ABSORBANT ACOUSTIQUE

(43) Date of publication of application: 07.07.2021
(73) Proprietor: Mitsubishi Electric Corporation, Tokyo 100-8310 (JP)
(72) Inventor: FUJIWARA, Susumu, Tokyo 100-8310 (JP); MICHIKAMI, Kazuya, Tokyo 100-8310 (JP)
(74) Representative: Pfenning, Meinig & Partner mbB
(86) International application number: PCT/JP2018/031740
(87) International publication number: WO 2020/044434

(56) References cited:
- WO-A1-99/17047
- JP-A- S5 620 893
- JP-A- H08 200 558
- JP-A- H09 133 434
- JP-A- H10 274 385
- JP-A- 2000 094 549
- JP-A- 2000 094 549
- JP-A- 2006 234 118
- JP-A- 2011 027 168
- JP-A- 2013 181 632
- JP-A- 2015 140 917
- JP-A- 2018 066 395
- US-A- 3 191 632
- US-B1- 6 651 694

## Description

### Technical Field

The present disclosure relates to a pipe with a sound absorber, a refrigeration cycle apparatus including the pipe with the sound absorber, and a method for mounting the sound absorber around the pipe.

### Background Art

Patent Literature 1 discloses a sound absorption structure. The sound absorption structure has a configuration in which a heat insulation mat, which is constituted by an inorganic fibrous assembly, and an inorganic fibrous woven cloth are layered adjacent to one another on an object to be covered, such as an exhaust pipe for vehicles. Patent Literature 2 discloses a pipe jacket which is a split sleeve of molded insulating material such as paper pulp and which is primarily intended to insulate a pipe to which it is applied. Patent Literature 3 discloses a heat insulation structure having an enhanced heat insulation property, and a method for its production.

### Citation List

### Patent Literature

Patent Literature 1: Japanese Unexamined Patent Application Publication No. 2018-28314
Patent Literature 2: US 3 191 632 A
Patent Literature 3: JP 2011 027168 A

### Summary of Invention

### Technical Problem

The sound absorption structure of Patent Literature 1 is produced in a manner such that the object to be covered is layered with the inorganic fibrous woven cloth after an adhesive is applied as appropriate, and the object is then layered with the heat insulation mat after an adhesive is applied as appropriate. There is no space between the object to be covered and the inorganic fibrous woven cloth, and the object to be covered and the inorganic fibrous woven cloth are brought into close contact with one another. There is also no space between the inorganic fibrous woven cloth and the heat insulation mat, and the inorganic fibrous woven cloth and the heat insulation mat are brought into close contact with one another. Thus, the sound absorption performance of the sound absorption structure depends on the thickness of the inorganic fibrous woven cloth and the thickness of the heat insulation mat. Consequently, there has been difficulty in increasing the sound absorption performance of the sound absorption structure.

The present disclosure has been made to solve such an above-described problem and has an object to provide a pipe with a sound absorber, a refrigeration cycle apparatus, and a method for mounting the sound absorber that are able to further increase a sound absorption performance.

### Solution to Problem

A pipe with a sound absorber according to the present invention has the features as recited in claim 1.

A refrigeration cycle apparatus according to the present invention includes the above-described pipe with the sound absorber.

A method for mounting a sound absorber according to the present invention includes the features recited in claim 5.

### Advantageous Effects of Invention

According to the embodiments of the present disclosure, sound energy can be converted into heat energy not only by using the sound absorber, but also by using the space between the refrigerant pipe and the sound absorber. Thus, it is possible to effectively attenuate the sound energy of sound that is transmitted through the refrigerant pipe and radiated. Consequently, the sound absorption performance of the pipe with the sound absorber can be further increased.

### Brief Description of Drawings

[Fig. 1] Fig. 1 is a top view of a configuration of a sound absorber-mounted pipe 100 according to Embodiment 1 of the present invention.
[Fig. 2] Fig. 2 is a sectional view taken along line II-II of Fig. 1.
[Fig. 3] Fig. 3 is a sectional view of a modification of the configuration of the sound absorber-mounted pipe 100 according to Embodiment 1 of the present invention.
[Fig. 4] Fig. 4 is a sectional view of another modification of the configuration of the sound absorber-mounted pipe 100 according to Embodiment 1 of the present invention.
[Fig. 5] Fig. 5 is a graph illustrating an example of a frequency distribution of transmitted sound radiated from a refrigerant pipe.
[Fig. 6] Fig. 6 is a graph illustrating the sound absorption characteristics of various kinds of sound absorption materials.
[Fig. 7] Fig. 7 is a side view of a configuration of a sound absorber-mounted pipe 110 according to Embodiment 2, not part of the present invention.
[Fig. 8] Fig. 8 is a sectional view taken along line VIII-VIII of Fig. 7.
[Fig. 9] Fig. 9 is an outline view of a configuration of a refrigeration cycle apparatus 200 according to Embodiment 3 of the present disclosure. Description of Embodiments

### Embodiment 1

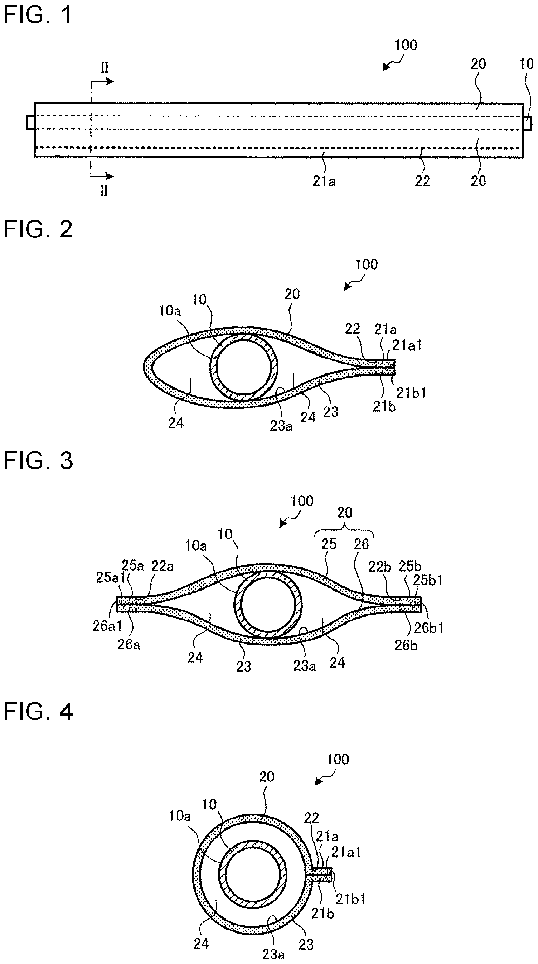

A sound absorber-mounted pipe and a method for mounting the sound absorber according to Embodiment 1 of the present disclosure will be described. Fig. 1 is a top view of a configuration of a sound absorber-mounted pipe 100 according to Embodiment 1. The right-and-left direction of Fig. 1 denotes the longitudinal direction of the sound absorber-mounted pipe 100. Fig. 2 is a sectional view taken along line II-II of Fig. 1.

As Figs. 1 and 2 illustrate, the sound absorber-mounted pipe 100 has a refrigerant pipe 10 in which refrigerant passes and a sound absorber 20 surrounding the outer circumference of the refrigerant pipe 10. The refrigerant pipe 10 is an example of a fluid pipe in which fluid passes. The refrigerant pipe 10 is a metal circular pipe. The refrigerant pipe 10 constitutes at least a portion of a refrigerant circuit of a refrigeration cycle apparatus. The sound absorber 20 surrounds the entire refrigerant pipe 10 in the circumferential direction of the refrigerant pipe 10. The sound absorber 20 surrounds directly the refrigerant pipe 10 without a material such as a heat insulator interposed therebetween. In the sound absorber 20, the sound energy of sound radiated from the refrigerant pipe 10 is converted into heat energy. The sound absorber 20 is provided to secure space 24 between the refrigerant pipe 10 and the sound absorber 20. In the space 24, as in the sound absorber 20, the sound energy of sound radiated from the refrigerant pipe 10 is converted into heat energy. The sound absorber-mounted pipe 100 is commercially available on the market with the sound absorber 20 being mounted around the refrigerant pipe 10.

The sound absorber 20 is provided for reducing refrigerant sound radiated from the refrigerant pipe 10. The sound absorber 20 is provided over the entire refrigerant pipe 10 in the longitudinal direction of the refrigerant pipe 10 or provided at a required point of the refrigerant pipe 10 in the longitudinal direction of the refrigerant pipe 10. For example, the sound absorber 20 is provided over a portion of the refrigerant pipe 10 at which a portion of a compressional wave in the refrigerant pipe 10 is "dense".

The sound absorber 20 is made mainly of a pulp-based fiber material. The pulp-based fiber material is constituted by a fiber assembly in which pulp-based fibers are intertwined with one another. Each pulp-based fiber is processed to have a fiber diameter of about 10 µm and to have a fiber length of about 100 µm.

The sound absorber 20 is originally shaped into a strip shape elongated in one direction. The sound absorber 20 has paired edge portions 21a and 21b that are each elongated in the longitudinal direction. The strip-shaped sound absorber 20 is bent so that the section perpendicular to the longitudinal direction has a U shape. The edge portion 21a and the edge portion 21b are superposed so that an inner surface 21a1 of the edge portion 21a and an inner surface 21b1 of the edge portion 21b face one another. The superposed edge portion 21a and edge portion 21b are fixed to one another at a stitched portion 22. The stitched portion 22 is formed by the edge portion 21a and the edge portion 21b being stitched together using a nylon thread. The edge portion 21a and the edge portion 21b are fixed to one another with the sound absorber 20 being bent to have a U-shaped section, and the sound absorber 20 thereby maintains a flat tubular shape. After the sound absorber 20 is shaped into a hollow tubular shape, the refrigerant pipe 10 is inserted into an inner circumferential region of the sound absorber 20 so as to be removed therefrom and inserted thereinto. Consequently, the sound absorber 20 is mounted around the refrigerant pipe 10 to produce the sound absorber-mounted pipe 100. In the produced sound absorber-mounted pipe 100, the refrigerant pipe 10 can slide along the sound absorber 20 in at least the longitudinal direction.

The sound absorber 20 is divided at the stitched portion 22, as a boundary, into a tubular portion 23 into which the refrigerant pipe 10 is inserted and the edge portions 21a and 21b. The sound absorber 20 is formed to be large relative to the refrigerant pipe 10 so that the space 24 is secured in at least a portion between an outer surface 10a of the refrigerant pipe 10 and an inner surface 23a of the tubular portion 23. In Embodiment 1, regarding a section perpendicular to the longitudinal direction of the refrigerant pipe 10, the circumferential length of the inner surface 23a of the tubular portion 23 of the sound absorber 20 is more than twice the circumferential length of the outer surface 10a of the refrigerant pipe 10. Thus, it is possible to secure the larger space 24 between the inner surface 23a of the tubular portion 23 and the outer surface 10a of the refrigerant pipe 10. Moreover, the sound absorber 20 is formed to be large relative to the refrigerant pipe 10, and it is thereby possible to use the sound absorber 20 common to refrigerant pipes 10 having different pipe diameters. Furthermore, the refrigerant pipe 10 is inserted into the inner circumferential region of the sound absorber 20 so as to be removed therefrom and inserted thereinto, and it is thereby possible to easily mount the sound absorber 20 around the refrigerant pipe 10.

The section of each fiber of the pulp-based fiber material has a plurality of air pores. The section of an inorganic fiber and, other than the pulp-based fiber, an organic fiber that have been typically used does not have an air pore. Thus, the sound absorber 20 having a predetermined thickness is formed by using the pulp-based fiber material, and it is thereby possible for the sound absorber 20 to maintain an air chamber with which sound energy is converted into heat energy. Consequently, the sound absorber 20 formed by using the pulp-based fiber material can obtain a sound absorption coefficient higher than the sound absorption coefficient of a sound absorber of the related art. A forming material of the sound absorber 20 may include a binder material. Such a binder material enables space between pulp-based fibers to be maintained. Such space functions as an air layer with which sound energy is converted into heat energy.

Condensation may occur on the outer surface 10a of the refrigerant pipe 10 due to a temperature difference between the refrigerant pipe 10 and a surrounding environment. The sound absorber 20 may be at high humidifies all the time depending on an installation environment of the refrigerant pipe 10. If condensation water on the surface of the refrigerant pipe 10 permeates the sound absorber 20, mold may also appear. Thus, to prevent moisture from permeating the sound absorber 20, a water-repellent layer may be formed on the inner circumferential surface of the sound absorber 20. The water-repellent layer is formed by using a resin film of, for example, PP or PE. The thickness of the water-repellent layer is preferably 20 µm or less, for example, 5 µm to 20 µm. This is because, if the thickness of the water-repellent layer is more than 20 µm, a sound wave that is generated from the refrigerant pipe 10 and is incident on the sound absorber 20 is blocked, and it may be impossible to obtain a sound absorption effect in a high-frequency band in which attenuation of sound energy is particularly required. Thus, in a manufacturing process of forming the water-repellent layer on the surface of the sound absorber 20, the forming control of the film thickness of the water-repellent layer is continuously performed so that the sound wave incident on the sound absorber 20 can be prevented from being blocked by the water-repellent layer. The forming material of the sound absorber 20 may include an antifungal agent. Thus, even if the sound absorber 20 absorbs moisture, it is possible to suppress mold from appearing.

The sound absorber 20 is shaped into a hollow tubular shape, and the sound absorber 20 is thereby easily mounted around the refrigerant pipe 10. Such a tubular shape of the sound absorber 20 is maintained by the edge portion 21a and the edge portion 21b being fixed to one another by being machine-stitched using a nylon thread. As described above, condensation may occur on the refrigerant pipe 10. Thus, if a metal material such as a staple for a stapler is used for fixing the edge portions 21a and 21b of the sound absorber 20 to one another, rust may form on such a metal material. Moreover, because the pulp-based fiber material does not melt due to heat, it is difficult to fix the edge portions 21a and 21b to one another by thermal fusion. Furthermore, when the edge portions 21a and 21b of the sound absorber 20 are bonded to one another by using, for example, a solvent and if the solvent on a bonding surface is in contact with the refrigerant pipe 10, the solvent may cause corrosion of the refrigerant pipe 10. Thus, in Embodiment 1, the edge portions 21a and 21b are fixed to one another by being stitched together using a nylon thread. Such stitching enables the entire edge portions 21a and 21b to be surely fixed to one another in the longitudinal direction in a short processing time. In addition, such a nylon thread does not adversely affect the refrigerant pipe 10 and hardly deteriorates over time. Thus, the durability of the sound absorber-mounted pipe 100 can be increased. Moreover, by using such a nylon thread, when the sound absorber-mounted pipe 100 is subjected to bending, the thread can be prevented from breaking and being disentangled due to stress.

For stitching of the sound absorber 20, "roll stitching" or "interlock stitching" enabling more robust stitching than straight stitching is used. Particularly, by using the roll stitching for stitching the edge portions 21a and 21b of the sound absorber 20 together, the sound absorber 20 is hardly disentangled, and the strength of the sound absorber 20 is increased.

In some cases, the sound absorber-mounted pipe 100 is cut into any appropriate length as needed. When the sound absorber-mounted pipe 100 is cut, not only the refrigerant pipe 10 is cut but also the sound absorber 20 is cut. By using such above-described stitching, it is possible to prevent a cut surface of the sound absorber 20 from being disentangled.

Usually, a fluid pipe such as the refrigerant pipe 10 is often surrounded by a heat insulator for heat-insulating from the outside air. For such a heat insulator, a foaming material such as urethane foam is used. The foaming material contains a plurality of mutually independent bubbles. Thus, the sound absorption performance of the foaming material is extremely low. In addition, because the surface of the processed foaming material is hard, sound that is incident on the surface of the foaming material is hardly transmitted through the surface, and the sound reflects off the surface of the foaming material. Thus, in the foaming material, sound absorption itself is hardly performed.

In addition, due to its material property, urethane foam causes hydrolysis. Thus, there arises a problem that a heat insulator made of urethane foam crumbles over time due to continuously receiving condensation water from the pipe.

The thermal conductivity of an existing heat insulator is 0.043 W/(m-K), whereas the thermal conductivity of the sound absorber 20 of Embodiment 1 is about 0.036 W/(m·K). That is, the sound absorber 20 has a heat insulating performance higher than the heat insulating performance of the existing heat insulator. Thus, by the fluid pipe being surrounded by the sound absorber 20 of Embodiment 1 instead of the existing heat insulator, it is possible to obtain not only an increased sound absorption effect but also a heat insulation effect greater than the heat insulation effect produced in the existing condition.

Fig. 3 is a sectional view of a modification of the configuration of the sound absorber-mounted pipe 100 according to Embodiment 1. As Fig. 3 illustrates, a sound absorber 20 of the present modification consists of two sound absorbers 25 and 26 that are each shaped into a strip shape elongated in one direction. The sound absorber 25 has paired edge portions 25a and 25b that are each elongated in the longitudinal direction. The sound absorber 26 has paired edge portions 26a and 26b that are each elongated in the longitudinal direction. The edge portion 25a and the edge portion 26a are superposed so that an inner surface 25a1 of the edge portion 25a and an inner surface 26a1 of the edge portion 26a face one another and fixed to one another at a stitched portion 22a. The edge portion 25b and the edge portion 26b are superposed so that an inner surface 25b1 of the edge portion 25b and an inner surface 26b1 of the edge portion 26b face one another and fixed to one another at a stitched portion 22b. The stitched portion 22a and the stitched portion 22b are each formed by the sound absorber 25 and the sound absorber 26 being stitched together using a nylon thread. In the sound absorber 20, between the stitched portion 22a and the stitched portion 22b, a tubular portion 23 into which the refrigerant pipe 10 is inserted is formed. Regarding a section perpendicular to the longitudinal direction of the refrigerant pipe 10, the circumferential length of an inner surface 23a of the tubular portion 23 is more than twice the circumferential length of the outer surface 10a of the refrigerant pipe 10. Thus, it is possible to secure a larger space 24 between the outer surface 10a of the refrigerant pipe 10 and the inner surface 23a of the tubular portion 23.

Fig. 4 is a sectional view of another modification of the configuration of the sound absorber-mounted pipe 100 according to Embodiment 1. As Fig. 4 illustrates, in the present modification, a sound absorber 20 shaped into a strip shape is bent so that the section thereof has a C shape. An edge portion 21a and an edge portion 21b are superposed so that an inner surface 21a1 of the edge portion 21a and an inner surface 21b1 of the edge portion 21b face one another and fixed to one another at a stitched portion 22. The stitched portion 22 is formed by the edge portion 21a and the edge portion 21b being stitched together using a nylon thread. In the sound absorber 20, a tubular portion 23 into which the refrigerant pipe 10 is inserted is formed. Regarding a section perpendicular to the longitudinal direction of the refrigerant pipe 10, the circumferential length of an inner surface 23a of the tubular portion 23 is more than twice the circumferential length of the outer surface 10a of the refrigerant pipe 10. Thus, it is possible to secure a larger space 24 between the outer surface 10a of the refrigerant pipe 10 and the inner surface 23a of the tubular portion 23.

As described above, the sound absorber-mounted pipe 100 according to Embodiment 1 has the refrigerant pipe 10 in which refrigerant passes and the sound absorber 20 of a pulp-based fiber material. The sound absorber 20 surrounds the outer circumference of the refrigerant pipe 10. The sound absorber 20 is provided to secure the space 24 between the outer surface 10a of the refrigerant pipe 10 and the inner surface 23a of the sound absorber 20. Here, the refrigerant is an example of fluid. The refrigerant pipe 10 is an example of a fluid pipe.

According to the configuration, sound energy can be converted into heat energy not only by using an air chamber and an air layer in the sound absorber 20, but also by using the space 24 between the refrigerant pipe 10 and the sound absorber 20. Thus, it is possible to effectively attenuate the sound energy of sound that is transmitted through the refrigerant pipe 10 and radiated. Consequently, the sound absorption performance of the sound absorber-mounted pipe 100 can be further increased. In addition, the sound absorption performance can be increased even if the thickness of the sound absorber 20 is not increased excessively, and it is thereby possible to reduce the manufacturing cost of the sound absorber-mounted pipe 100.

In the sound absorber-mounted pipe 100 according to Embodiment 1, regarding a section perpendicular to the longitudinal direction of the refrigerant pipe 10, the circumferential length of the inner surface 23a of the sound absorber 20 is more than twice the circumferential length of the outer surface 10a of the refrigerant pipe 10. According to the configuration, it is possible to secure the larger space 24 between the outer surface 10a of the refrigerant pipe 10 and the inner surface 23a of the sound absorber 20.

In the sound absorber-mounted pipe 100 according to Embodiment 1, the sound absorber 20 has the paired edge portions 21a and 21b. The sound absorber 20 is bent so that the inner surface 21a1 and the inner surface 21b1 of the paired edge portions 21a and 21b face one another. The paired edge portions 21a and 21b are fixed to one another. According to the configuration, the sound absorber 20 can maintain a flat tubular shape, and it is thereby possible to surely secure the space 24 between the outer surface 10a of the refrigerant pipe 10 and the inner surface 23a of the sound absorber 20.

In the sound absorber-mounted pipe 100 according to Embodiment 1, the paired edge portions 21a and 21b are stitched together using a nylon thread. According to the configuration, it is possible to surely shape the sound absorber 20 into a tubular shape in a short processing time and to increase the durability of the sound absorber-mounted pipe 100.

In the sound absorber-mounted pipe 100 according to Embodiment 1, the refrigerant pipe 10 is inserted into the inner circumferential region of the sound absorber 20 so as to be removed therefrom and inserted thereinto. According to the configuration, it is possible to easily mount the sound absorber 20 around the refrigerant pipe 10.

To reduce sound radiated from a refrigerant pipe, measures has been taken, such as a measure of surrounding the circumference of the refrigerant pipe with a sound insulator made of metal or a measure of surrounding a portion of the refrigerant pipe or the entire refrigerant pipe with a vibration insulator made of rubber. However, the sound that can be reduced by taking such measures is limited to sound radiated from a portion of a pipe in a housing of, for example, an indoor unit or an outdoor unit. For example, when the vibration insulator is used, the amplitude of vibration when the surface of the refrigerant pipe vibrates can be minimized, and it is thereby possible to attenuate the vibration energy of vibration sound radiated from the surface of the refrigerant pipe. Refrigerant sound radiated from the refrigerant pipe includes, other than the vibration sound radiated due to vibration of the refrigerant pipe itself, transmitted sound that is transmitted through the refrigerant pipe from the inside of the refrigerant pipe and radiated. When the sound insulator or the vibration insulator is used, it is impossible to attenuate the sound energy of the transmitted sound that is transmitted through the refrigerant pipe from the inside of the refrigerant pipe and radiated.

The transmitted sound radiated from the refrigerant pipe may be affected by radiation of the sound having a peak frequency component in a high-frequency band of 5 kHz or more. The factor that causes such sound radiation is in-plane vibration of the refrigerant pipe. The in-plane vibration of the refrigerant pipe, unlike the case in which the refrigerant pipe itself vibrates, cannot be attenuated even if the vibration insulator is mounted around the refrigerant pipe. Thus, with the vibration insulator of the related art, it is impossible to take sufficient countermeasures for such sound radiation relative to the transmitted sound radiated from the refrigerant pipe.

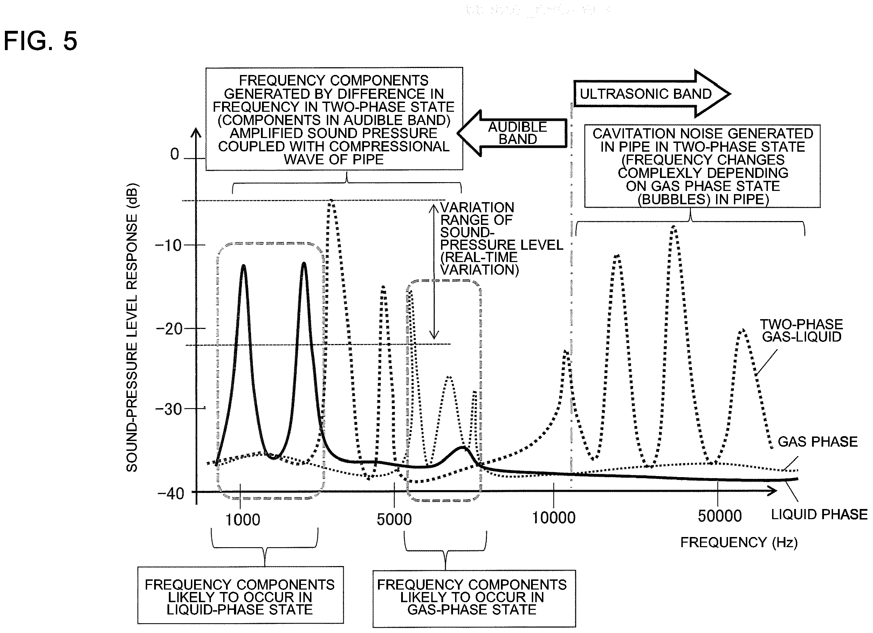

Fig. 5 is a graph illustrating an example of a frequency distribution of transmitted sound radiated from a refrigerant pipe. In Fig. 5, the horizontal axis denotes frequency (Hz), and the vertical axis denotes sound-pressure level response (dB). As Fig. 5 illustrates, when refrigerant that passes in the refrigerant pipe is in a liquid-phase state, in the frequency distribution of the transmitted sound, one or more peak components are generated in an audible band of 1 kHz to 3 kHz. Frequency components in such a band of 1 kHz to 3 kHz are frequency components likely to occur when the refrigerant is in the liquid-phase state. When the refrigerant that passes in the refrigerant pipe is in a gas-phase state, in the frequency distribution of the transmitted sound, one or more peak components are generated in an audible band of 5 kHz to 7 kHz. Frequency components in such a band of 5 kHz to 7 kHz are frequency components likely to occur when the refrigerant is in the gas-phase state. When the refrigerant that passes in the refrigerant pipe is in a two-phase state, in the frequency distribution of the transmitted sound, a plurality of peak components are generated in an audible band of 3 kHz to 5 kHz and in an ultrasonic band of 10 kHz or more. Such a peak component generated in the audible band is a frequency component generated by the difference in frequency between the peak component in the gas-phase state and the peak component in the liquid-phase state and is a frequency component with sound pressure that is amplified by being coupled with a compressional wave of the pipe. Such a peak component generated in the ultrasonic band is cavitation noise generated in the pipe. The frequency of the peak component changes complexly depending on the gas phase in the pipe, that is, a state of bubbles in the pipe. When a plurality of peak components are generated, differential sound generated by a fluctuation phenomenon or refrigerant sound that has a chord-like sound characteristic due to an effect of a plurality of peak components is also generated. Such sound is generated during operation of a refrigeration cycle apparatus. Thus, if the refrigerant sound is generated at night in an indoor unit installed in a room, a user sleeping in the room is likely to be discontent.

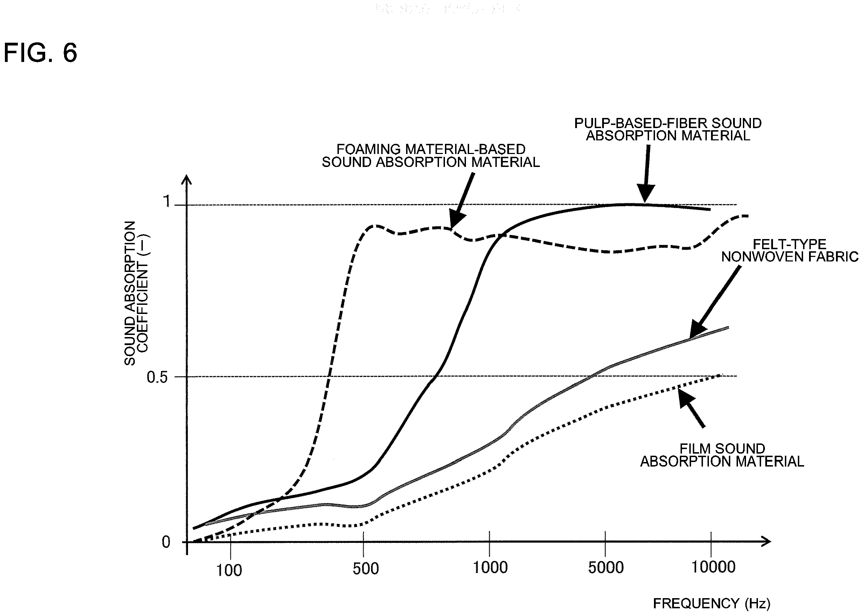

Fig. 6 is a graph illustrating the sound absorption characteristics of various kinds of sound absorption materials. In Fig. 6, the horizontal axis denotes frequency (Hz), and the vertical axis denotes sound absorption coefficient (-). As Fig. 6 illustrates, in a frequency-band of 1 kHz and above, the sound absorption coefficient of a pulp-based-fiber sound absorption material is higher than the sound absorption coefficient of any of a film sound absorption material, a felt-type nonwoven fabric, and a foaming material-based sound absorption material and remains substantially steady regardless of frequency. Thus, it is clear that the sound absorber 20 formed by using the pulp-based fiber material has an excellent characteristic of sound absorption of the transmitted sound having a peak in a frequency band of 1 kHz or more.

Therefore, the sound absorber-mounted pipe 100 according to Embodiment 1 enables effective attenuation of the transmitted sound radiated from the inside of the refrigerant pipe 10 to the outside of the refrigerant pipe 10. Thus, in Embodiment 1, other than countermeasures for vibration sound by using a vibration insulation structure of the refrigerant pipe 10, countermeasures for the transmitted sound radiated from the refrigerant pipe 10 can also be taken. Consequently, countermeasures for all the refrigerant sound radiated from the refrigerant pipe 10 can be taken.

### Embodiment 2

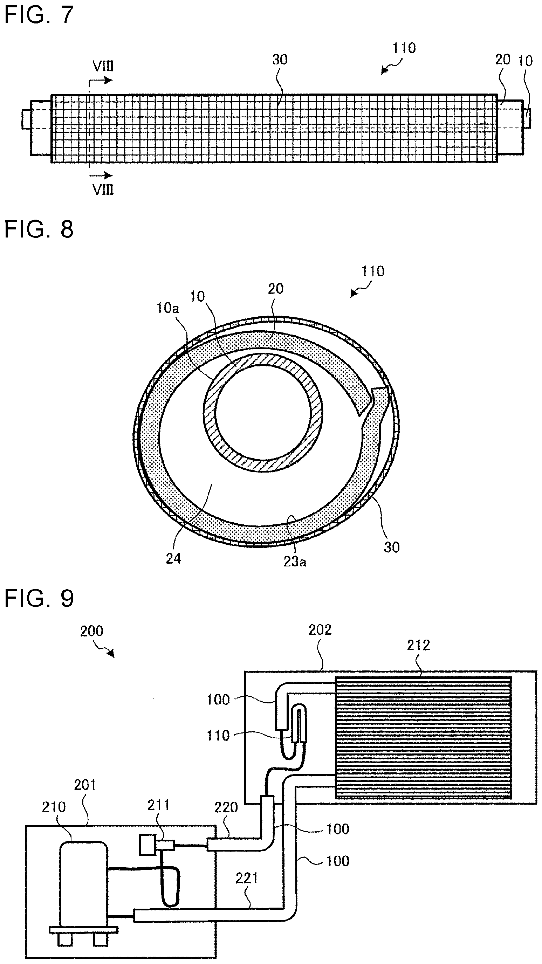

A sound absorber-mounted pipe according to Embodiment 2 and a method for mounting the sound absorber will be described. Fig. 7 is a side view of a configuration of a sound absorber-mounted pipe 110 according to Embodiment 2. The right-and-left direction of Fig. 7 denotes the longitudinal direction of the sound absorber-mounted pipe 110. Fig. 8 is a sectional view taken along line VIII-VIII of Fig. 7. As Figs. 7 and 8 illustrate, the sound absorber-mounted pipe 110 has a refrigerant pipe 10 in which refrigerant passes, a sound absorber 20 surrounding the outer circumference of the refrigerant pipe, and a covering portion 30 further surrounding the outer circumference of the sound absorber 20. The sound absorber 20 is provided to secure space 24 between an outer surface 10a of the refrigerant pipe 10 and an inner surface 23a of the sound absorber 20. The circumferential length of the inner surface 23a of the sound absorber 20 is, for example, more than twice the circumferential length of the outer surface 10a of the refrigerant pipe 10.

The sound absorber 20 is made mainly of a pulp-based fiber material. The pulp-based fiber material is constituted by a fiber assembly in which pulp-based fibers are intertwined with one another. Each pulp-based fiber is processed to have a fiber diameter of about 10 µm and to have a fiber length of about 100 µm. The sound absorber 20 is shaped into a strip shape and rounded to surround the entire refrigerant pipe 10 in the circumferential direction with the space 24 interposed therebetween. The sound absorber 20 surrounds directly the refrigerant pipe 10 without a material such as a heat insulator interposed therebetween. A resilient force for returning to the original shape is applied to the rounded sound absorber 20. However, the covering portion 30 provided in an outer circumferential region inhibits the sound absorber 20 from returning to the original shape. As a result, the rounded sound absorber 20 is brought into close contact with the inner surface of the covering portion 30, and the shape of the sound absorber 20 is maintained by the covering portion 30. The sound absorber 20 is provided over the entire refrigerant pipe 10 in the longitudinal direction of the refrigerant pipe 10 or provided at a required point of the refrigerant pipe 10 in the longitudinal direction of the refrigerant pipe 10. The covering portion 30 is provided over the entire sound absorber 20 in the longitudinal direction of the sound absorber 20 or provided at a required point of the sound absorber 20 in the longitudinal direction of the sound absorber 20.

The covering portion 30 is made of a metal such as aluminum or stainless steel and has a mesh structure or a perforated metal structure. The covering portion 30 has a level of hardness at which the covering portion 30 is deformed by a force exerted by a person and the shape formed after such deformation is maintained even when the force stops being exerted. The covering portion 30 is formed to have a thickness of 2 mm or less, for example, a thickness of about 1 mm to 2 mm so that the covering portion 30 is cut into a required length using a tool such as a pair of scissors. The covering portion 30 is shaped into a strip shape and rounded to surround the outer circumference of the sound absorber 20. The covering portion 30 maintains the shape of the sound absorber 20 and has a function of causing the sound absorber 20 to stay in place around the refrigerant pipe 10 so that the sound absorber 20 does not fall off the refrigerant pipe 10.

When the sound absorber 20 is mounted around the refrigerant pipe 10, first, the sound absorber 20 is rounded to surround the outer circumference of the refrigerant pipe 10. The covering portion 30 is then mounted around the outer circumference of the sound absorber 20 so that the space 24 is secured between the outer surface 10a of the refrigerant pipe 10 and the inner surface 23a of the sound absorber 20. The covering portion 30 is rounded by a force exerted by an operator so that the covering portion 30 surrounds the outer circumference of the sound absorber 20. The rounded covering portion 30 maintains such a shape even when the operator stops exerting the force. Thus, the shape of the sound absorber 20 is also maintained by the covering portion 30. Through such a process, the covering portion 30 is mounted around the outer circumference of the sound absorber 20. The sound absorber 20 is provided to secure the space 24 between the refrigerant pipe 10 and the sound absorber 20. A portion of the sound absorber 20 may be in contact with the refrigerant pipe 10. The sound absorber 20 and the covering portion 30 may be formed as a single body.

In Embodiment 2, the covering portion 30 is deformed by a force exerted by a person, and it is thereby possible to mount the covering portion 30 without using any specific tool.

In Embodiment 2, for example, midway through the manufacturing process of a refrigeration cycle apparatus or after the refrigeration cycle apparatus is installed, the sound absorber 20 can also be newly mounted around the refrigerant pipe 10 that has already been mounted. In addition, in Embodiment 2, although the sound absorber 20 and the covering portion 30 are mounted around the linear refrigerant pipe 10, the sound absorber 20 and the covering portion 30 can also be mounted around a bent refrigerant pipe 10 that has been subjected to bending.

As described above, the method for mounting the sound absorber 20 according to Embodiment 2 includes a step of rounding the sound absorber 20 of the pulp-based fiber material so that the sound absorber 20 surrounds the outer circumference of the refrigerant pipe 10 in which refrigerant passes and a step of mounting the covering portion 30, which maintains the shape of the sound absorber 20, around the outer circumference of the sound absorber 20 so that the space 24 is secured between the outer surface 10a of the refrigerant pipe 10 and the inner surface 23a of the sound absorber 20. Here, the refrigerant is an example of fluid. As the fluid, not only the refrigerant but also liquid such as water or brine can be used, and gas can also be used. The refrigerant pipe 10 is an example of a fluid pipe.

According to Embodiment 2, the sound absorber 20 can subsequently be mounted around the refrigerant pipe 10 that has already been mounted in the refrigeration cycle apparatus. Moreover, in Embodiment 2, the sound absorber 20 can be mounted around the refrigerant pipe 10 without using, for example, a double-sided tape, an adhesive, and a cable tie. Thus, it is possible to easily mount the sound absorber 20 around the refrigerant pipe 10 and to easily secure the space 24 between the refrigerant pipe 10 and the sound absorber 20. Furthermore, according to Embodiment 2, sound energy can be converted into heat energy not only by using an air chamber and an air layer in the sound absorber 20, but also by using the space 24 between the refrigerant pipe 10 and the sound absorber 20. Thus, it is possible to effectively attenuate the sound energy of sound that is transmitted through the refrigerant pipe 10 and radiated. Consequently, the sound absorption performance of the sound absorber-mounted pipe 110 in which the sound absorber 20 is mounted around the refrigerant pipe 10 can be further increased.

### Embodiment 3

A refrigeration cycle apparatus according to Embodiment 3 of the present invention will be described. Fig. 9 is an outline view of a configuration of a refrigeration cycle apparatus 200 according to Embodiment 3. In Embodiment 3, as the refrigeration cycle apparatus 200, an air-conditioning apparatus is illustrated. As Fig. 9 illustrates, the refrigeration cycle apparatus 200 includes an outdoor unit 201 and an indoor unit 202. A compressor 210, an outdoor heat exchanger, which is not illustrated, an electronic expansion valve 211, and other constituents are accommodated in a housing of the outdoor unit 201. An indoor heat exchanger 212 and other constituents are accommodated in a housing of the indoor unit 202. The refrigeration cycle apparatus 200 includes a refrigerant circuit in which the compressor 210, the outdoor heat exchanger, the electronic expansion valve 211, and the indoor heat exchanger 212 are annularly connected to one another through a refrigerant pipe. In the refrigerant circuit of the refrigeration cycle apparatus 200, a four-way valve that changes the refrigerant flow depending on cooling operation and heating operation may be provided. An extension pipe 220 and an extension pipe 221 each connect the outdoor unit 201 and the indoor unit 202 to one another. Each of the extension pipes 220 and 221 is a portion of the refrigerant pipe of the refrigeration cycle apparatus 200.

According to the present invention, the sound absorber-mounted pipe 100 of Embodiment 1 is used for at least a portion of the refrigerant pipe of the refrigeration cycle apparatus 200. For example, the sound absorber-mounted pipe 100 is used for each of the extension pipes 220 and 221. The sound absorber-mounted pipe 1 is used for a refrigerant pipe in the indoor unit 202 as needed. For example but not part of the present invention, if it is difficult to mount the sound absorber-mounted pipe 100, the sound absorber-mounted pipe 110 with the sound absorber 20 that can be mounted after the refrigerant pipe 10 is mounted is used. The sound absorber-mounted pipe 100 may also be used for a refrigerant pipe in the outdoor unit 201 as needed.

As described above, the refrigeration cycle apparatus 200 according to Embodiment 3 includes the sound absorber-mounted pipe 100 according to Embodiment 1. According to the configuration, during the cooling operation or the heating operation of the refrigeration cycle apparatus 200, it is possible to effectively attenuate the sound energy of sound radiated from the refrigerant pipe. Thus, quietness of the refrigeration cycle apparatus 200 can be increased.

### Reference Signs List

10 refrigerant pipe 10a outer surface 20 sound absorber 21a, 21b edge portion 21a1, 21b1 inner surface 22, 22a, 22b stitched portion 23 tubular portion 23a inner surface 24 space 25, 26 sound absorber 25a, 25b, 26a, 26b edge portion 25a1, 25b1, 26a1, 26b1 inner surface 30 covering portion 100, 110 sound absorber-mounted pipe 200 refrigeration cycle apparatus 201 outdoor unit 202 indoor unit 210 compressor 211 electronic expansion valve 212 indoor heat exchanger 220 221 extension pipe

## Claims

1. A pipe with a sound absorber (25, 26), comprising:
a fluid pipe (10) in which fluid passes; and
a sound absorber (25, 26) of a pulp-based fiber material, the sound absorber (25, 26) surrounding an outer circumference of the fluid pipe (10),
the sound absorber (25, 26) being provided to secure space between an outer surface (10a) of the fluid pipe (10) and an inner surface (21a1, 21b1) of the sound absorber (25, 26),
the sound absorber (25, 26) having paired edge portions (21a, 21b),
the sound absorber (25, 26) being bent so that inner surfaces (21a1, 21b1) of the paired edge portions (21a, 21b) face one another,
the paired edge portions (21a, 21b) being fixed to one another,
**characterized in that** the paired edge portions (21a, 21b) are stitched together using a nylon thread.

2. The pipe with the sound absorber (25, 26) of claim 1, wherein
regarding a section perpendicular to a longitudinal direction of the fluid pipe (10), a circumferential length of the inner surface (21a1, 21b1) of the sound absorber (25, 26) is more than twice a circumferential length of the outer surface (10a) of the fluid pipe (10).

3. The pipe with the sound absorber (25, 26) of any one of claims 1 or 2, wherein
the fluid pipe (10) is inserted into an inner circumferential region of the sound absorber (25, 26) so as to be removed therefrom and inserted thereinto.

4. A refrigeration cycle apparatus comprising:
the pipe with a sound absorber (25, 26) of any one of claims 1 to 3.

5. A method for mounting a sound absorber (25, 26), the method comprising:
rounding a sound absorber (25, 26) of a pulp-based fiber material so that the sound absorber (25, 26) surrounds an outer circumference of a fluid pipe (10) in which fluid passes, wherein the sound absorber (25, 26) has paired edge portions (21a, 21b);
wherein the sound absorber (25, 26) is bent so that inner surfaces (21a1, 21b1) of the paired edge portions (21a, 21b) face one another,
wherein the paired edge portions (21a, 21b) are fixed to one another, and
mounting a covering portion (30), which maintains a shape of the sound absorber (25, 26), around an outer circumference of the sound absorber (25, 26) so that space is secured between an outer surface (10a) of the fluid pipe (10) and an inner surface (21a1, 21b1) of the sound absorber (25, 26), the covering portion (30) being shaped into a strip shape and rounded to surround the outer circumference of the sound absorber (25, 26),
**characterized in that** the paired edge portions (21a, 21b) are stitched together using a nylon thread.

## Patentansprüche

1. Leitung mit Schalldämpfer (25, 26), umfassend:
eine Fluidleitung (10), durch die ein Fluid fließt; und
einen Schalldämpfer (25, 26) aus einem Fasermaterial auf Zellstoffbasis, wobei der Schalldämpfer (25, 26) einen Außenumfang der Fluidleitung (10) umgibt,
wobei der Schalldämpfer (25, 26) vorgesehen ist, einen Raum zwischen einer Außenfläche (10a) der Fluidleitung (10) und einer Innenfläche (21a1, 21b1) des Schalldämpfers (25, 26) zu sichern,
wobei der Schalldämpfer (25, 26) gepaarte Kantenabschnitte (21a, 21b) aufweist,
wobei der Schalldämpfer (25, 26) so gebogen ist, dass Innenflächen (21a1, 21b1) der gepaarten Kantenabschnitte (21a, 21b) einander gegenüberliegen,
wobei die gepaarten Kantenabschnitte (21a, 21b) aneinander befestigt sind,
**dadurch gekennzeichnet, dass** die gepaarten Kantenabschnitte (21a, 21b) mit einem Nylonfaden zusammengenäht sind.

2. Leitung mit dem Schalldämpfer (25, 26) nach Anspruch 1, wobei in Bezug auf einen Abschnitt, der senkrecht zu einer Längsrichtung der Fluidleitung (10) ist, eine Umfangslänge der Innenfläche (21a1, 21b1) des Schalldämpfers (25, 26) mehr als das Doppelte einer Umfangslänge der Außenfläche (10a) der Fluidleitung (10) beträgt.

3. Leitung mit dem Schalldämpfer (25, 26) nach einem der Ansprüche 1 bis 2, wobei
die Fluidleitung (10) so in einen inneren Umfangsbereich des Schalldämpfers (25, 26) eingeführt ist, dass sie aus diesem herausgenommen und in diesen eingeführt werden kann.

4. Kältekreislaufvorrichtung, umfassend:
die Leitung mit einem Schalldämpfer (25, 26) nach einem der Ansprüche 1 bis 3.

5. Verfahren zur Befestigung eines Schalldämpfers (25, 26), wobei das Verfahren umfasst:
Abrunden eines Schalldämpfers (25, 26) aus einem Fasermaterial auf Zellstoffbasis, sodass der Schalldämpfer (25, 26) einen Außenumfang einer Fluidleitung (10), in der Fluid fließt, umgibt, wobei der Schalldämpfer (25, 26) gepaarte Kantenabschnitte (21a, 21b) aufweist;
wobei der Schalldämpfer (25, 26) so gebogen ist, dass Innenflächen (21a1, 21b1) der gepaarten Kantenabschnitte (21a, 21b) einander gegenüberliegen,
wobei die gepaarten Kantenabschnitte (21a, 21b) aneinander befestigt sind, und
Befestigen eines Abdeckungsteils (30), das eine Form des Schalldämpfers (25, 26) beibehält, um einen Außenumfang des Schalldämpfers (25, 26), so dass ein Raum zwischen einer Außenfläche (10a) der Fluidleitung (10) und einer Innenfläche (21a1, 21b1) des Schalldämpfers (25, 26) gesichert ist, wobei das Abdeckungsteil (30) streifenförmig geformt und abgerundet ist, um den Außenumfang des Schalldämpfers (25, 26) zu umgeben,
**dadurch gekennzeichnet, dass** die gepaarten Kantenabschnitte (21a, 21b) mit einem Nylonfaden zusammengenäht sind.

## Revendications

1. Tuyau avec un absorbant acoustique (25, 26), comprenant :
un tuyau de fluide (10) dans lequel passe le fluide ; et
un absorbant acoustique (25, 26) en matériau fibreux à base de pâte, l'absorbant acoustique (25, 26) entourant une circonférence extérieure du tuyau de fluide (10),
l'absorbant acoustique (25, 26) étant prévu pour sécuriser l'espace entre une surface extérieure (10a) du tuyau de fluide (10) et une surface intérieure (21a1, 21b1) de l'absorbant acoustique (25, 26),
l'absorbant acoustique (25, 26) présentant des parties de bord appariées (21a, 21b),
l'absorbant acoustique (25, 26) étant plié de manière à ce que les surfaces intérieures (21a1, 21b1) des parties de bord appariées (21a, 21b) se fassent face,
les parties de bord appariées (21a, 21b) étant fixées l'une à l'autre,
**caractérisé en ce que** les parties de bord appariées (21a, 21b) sont cousues ensemble à l'aide d'un fil de nylon.

2. Tuyau avec l'absorbant acoustique (25, 26) selon la revendication 1, dans lequel en ce qui concerne une section perpendiculaire à une direction longitudinale du tuyau de fluide (10), une longueur circonférentielle de la surface intérieure (21a1, 21b1) de l'absorbant acoustique (25, 26) est plus de deux fois une longueur circonférentielle de la surface extérieure (10a) du tuyau de fluide (10).

3. Tuyau avec l'absorbant acoustique (25, 26) selon l'une quelconque des revendications 1 ou 2, dans lequel
le tuyau de fluide (10) est inséré dans une zone circonférentielle intérieure de l'absorbant acoustique (25, 26) de manière à en être retiré et inséré dans celui-ci.

4. Appareil à cycle frigorifique comprenant :
le tuyau avec un absorbant acoustique (25, 26) selon l'une quelconque des revendications 1 à 3.

5. Procédé pour le montage d'un absorbant acoustique (25, 26), le procédé comprenant :
l'arrondissement d'un absorbant acoustique (25, 26) en matériau fibreux à base de pâte de manière à ce que l'absorbant acoustique (25, 26) entoure une circonférence extérieure d'un tuyau de fluide (10) dans lequel passe le fluide, dans lequel l'absorbant acoustique (25, 26) présente des parties de bord appariées (21a, 21b) ;
dans lequel l'absorbant acoustique (25, 26) est plié de manière à ce que les surfaces intérieures (21a1, 21b1) des parties de bord appariées (21a, 21b) se fassent face,
dans lequel les parties de bord appariées (21a, 21b) sont fixées l'une à l'autre, et
le montage d'une partie de recouvrement (30), qui conserve la forme de l'absorbant acoustique (25, 26), autour d'une circonférence extérieure de l'absorbant acoustique (25, 26) de manière à garantir un espace entre une surface extérieure (10a) du tuyau de fluide (10) et une surface intérieure (21a1, 21b1) de l'absorbant acoustique (25, 26), la partie de recouvrement (30) présentant la forme d'une bande et étant arrondie de manière à entourer la circonférence extérieure de l'absorbant acoustique (25, 26),
**caractérisé en ce que** les parties de bord appariées (21a, 21b) sont cousues ensemble à l'aide d'un fil de nylon.
